# EUROPEAN PATENT SPECIFICATION

(11) **EP 0 569 644 B1**
(45) Date of publication and mention of the grant of the patent: **15.01.1997**
(21) Application number: 92401263.6
(22) Date of filing: 06.05.1992
(51) Int. Cl.: C02F 1/04, B01D 1/26, B01D 1/06, F28F 13/18

(54) **Equipment for manufacturing ultrapure water**
Vorrichtung zur Erzeugung superreinen Wassers
Installation pour la préparation de l'eau ultrapure

(43) Date of publication of application: 18.11.1993
(73) Proprietor: HITACHI ZOSEN CORPORATION, Konohana-ku, Osaka 554 (JP)
(72) Inventor: Sawada, Hidetaka, Sakai-shi, Osaka (JP); Hirano, Takashi, Sakai-shi, Osaka (JP); Momose, Shoichi, Hirakata-shi, Osaka (JP); Inoue, Shiro, Ikeda-shi, Osaka (JP); Suematsu, Hideo, Nishinomiya-shi, Hyogo (JP); Koba, Kazunori, Kawachinagano-shi, Osaka (JP)
(74) Representative: Peaucelle, Chantal

(56) References cited:
- DE-C- 809 311
- GB-A- 1 028 516
- DATABASE WPIL Week 9232, Derwent Publications Ltd., London, GB; AN 262117
- DATABASE WPIL Week 8810, Derwent Publications Ltd., London, GB; AN 68523
- PATENT ABSTRACTS OF JAPAN vol. 10, no. 343 (E-456)19 November 1986
- PATENT ABSTRACTS OF JAPAN vol. 14, no. 242 (C-721)23 May 1990

## Description

### FIELD OF THE INVENTION

The present invention relates to equipment for manufacturing ultra-pure water used in, for example, electronic industries such as semiconductor industries.

### DESCRIPTION OF THE PRIOR ART

Ultra-pure water used in electronic industries is required to have water qualities, for example, as listed in Table 1.

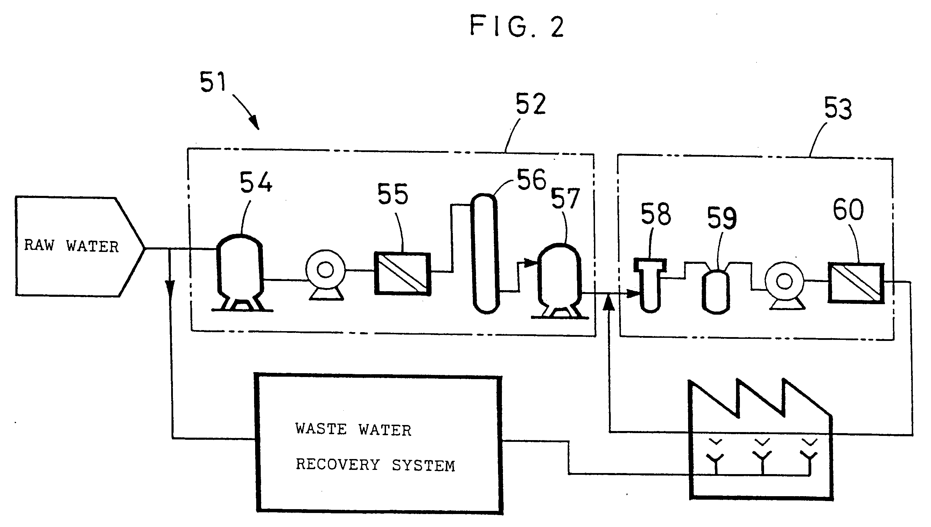

An example of conventional apparatus for manufacturing ultra-pure water is shown in Fig. 2. The apparatus (51) is composed of a primary pure water producing system (52) and a secondary pure water producing system (53), wherein the primary pure water producing system (52) mainly comprises a filtering apparatus (54), a reverse osmosis apparatus (55), a degassing apparatus (56), and an ion exchange apparatus (57), while the secondary pure water producing system (53) mainly comprises an ultra-violet bactericidal apparatus (58), a demineralizer (59), and a reverse osmosis apparatus (60). In the secondary pure water producing system of this construction, however, there have been deficiencies that the construction of the equipment is so complex that monitoring of operation is troublesome and that, since an ion exchange apparatus and a reverse osmosis apparatus are used in the producing system, the costs of regeneration of ion exchange reins and exchange of reverse osmosis membrane are high.

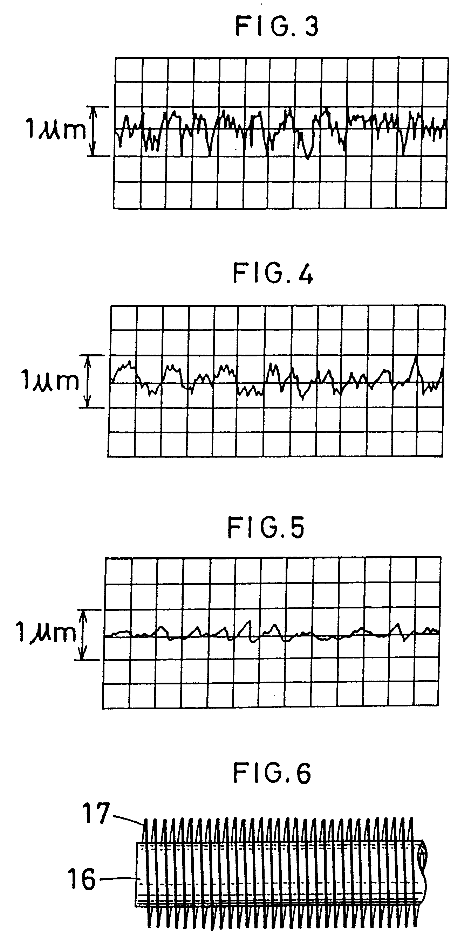

In an example of equipment for manufacturing pure water for medical use, a multiple effect evaporating apparatus has been used. This apparatus was, however, impossible to be used for manufacturing ultra-pure water for use in electronic industries for the following reasons. The finishing method of inner faces of evaporators in this apparatus was a method of mechanical polishing (#400-buff finishing) to obtain a mean roughness of 0.8 µm or less or a method of electropolishing over mechanical polishing to obtain a mean roughness of 0.7 µm or less. Since numerous heavily undulated convexities and concavities existed on the inner surface of the evaporator as shown in Fig. 3 and Fig. 4 after the surface finishing of such grades as described above, fine particles adhering to the concavities could not be removed by washing, thereby causing prolonged flowing out of fine particles into pure water products during the operation of the equipment. Moreover, heavily undulated concavities and convexities on the inner surface of the evaporator made the surface so active that metal ions were liable to be eluted out, thus making it impossible to reduce the concentration of metal ions in the water products below 0.01 ppb.

Other apparatus are disclosed in GB-A-1028516, DE-C-809311 and JP-A-2063592 (PAJ abstract).

GB-A-1028516 discloses an apparatus for concentration of liquors including a multiple-effect vertical straight tube evaporator and a flash evaporation plant connected in series as regards the flow of liquor.

DE-C-809311 discloses a multi-step evaporator. But, the distilled water thus produced contains 2 mg/l of salts.

As for JP-A-2063592, it relates to a method for obtaining distilled water wherein raw water is subjected to an ion-exchange treatment or reverse osmosis membrane treatment by passing the vapor generated in a device through a hydrophobic porous membrane.

### SUMMARY OF THE INVENTION

The object of the present invention is to provide equipment for manufacturing ultra-pure water which solves all the technical problems of the prior art described above.

The present invention has been achieved based on the knowledge that the above-described object can be attained by mirror finishing desired portions of the secondary pure water producing system surfaces to a desired degree of mean surface roughness.

The equipment according to the present invention is characterized in that, in the multiple effect evaporating apparatus for obtaining the secondary pure water by evaporating the primary water from the primary pure water producing system, the surface of the portions, with which the water vapor generated by evaporating the primary pure water or the concentrated primary pure water and the secondary pure water produced by condensing the generated water vapor come into contact, respectively in the required effect, is mirror finished so as to have a mean roughness of 0.6 µm or less.

The portions to which mirror finishing is applied are, for example, the outer surface of the heat transfer pipe, the inner surface of the evaporator body and the outer surface of the condenser, with which pure water vapor in the evaporator and ultra-pure water produced by the water vapor come into contact, respectively.

Mirror finishing is carried out, for example, by applying complex electropolishing to the surface of the material.

The reason why the mean roughness is limited to 0.6 µm or less is that when the mean roughness is over 0.6 µm, numerous heavily undulated convexities and concavities remain on the processed surface and fine particles adhering to the concavities cannot be removed even by washing, thereby mingling the particles into pure water products for a prolonged period of time, and when such heavily undulated concavities and convexities remain on the processed surface, the surface is made active and metal ions are liable to be eluted out, thereby making it impossible to reduce the concentration of metal ions in the water products below 0.01 ppb.

According to the present invention, fine particles are prevented from adhering onto the surface effectively and the adhering fine particles can be removed easily by washing, because the surface of desired portions of the secondary pure water producing system is mirror finished so as to have a mean roughness of 0.6 µm or less. Elution of metal ions is decreased as low as possible because the surface is so smooth, and hence the concentration of metal ions is suppressed below 0.01 ppb.

According to the equipment for manufacturing ultra-pure water of the present invention, monitoring of the operation is substantially simplified as compared with the equipment shown in Fig. 2, and the cost for exchange and regeneration of the resin as well as the cost for exchange of the reverse osmosis membrane are saved, because both of ion exchange resin and reverse osmosis apparatus are not used.

Finned heat transfer pipes are preferable as heat transfer pipes for the multiple effect evaporating apparatus. Dropwise condensation is likely to occur in the finned heat transfer pipe which has been mirror finished, thereby increasing overall heat transfer coefficient. Therefore, when mirror-finished finned heat transfer pipes are used as heat transfer pipes, the equipment for manufacturing pure water can be compacted as compared with the equipment using non-finned pipes. Moreover, the concentration of iron ions can be reduced to a great extent by using mirror-finished finned heat transfer pipes.

Fins of the finned heat transfer pipes may be a number of flange-shaped fins or radial fins parallel to the axis of the heat transfer pipe in addition to the spiral fins.

### BRIEF DESCRIPTION OF THE DRAWINGS

Fig. 1 is a flow sheet of the pure water manufacturing system of an embodiment of the present invention;
Fig. 2 is a flow sheet of an example of conventional pure water manufacturing systems;
Fig. 3 is a-graph showing the surface roughness by conventional mechanical polishing;
Fig. 4 is a graph showing the surface roughness by conventional mechanical polishing and electropolishing;
Fig. 5 is a graph showing the mirror-finished surface roughness according to the present invention;
Fig. 6 is a view showing a modified example of the heat transfer pipe used in the present invention; and
Fig. 7 is a graph showing an example of overall heat transfer coefficient of the heat transfer pipe.

### DESCRIPTION OF THE PREFERRED EMBODIMENTS

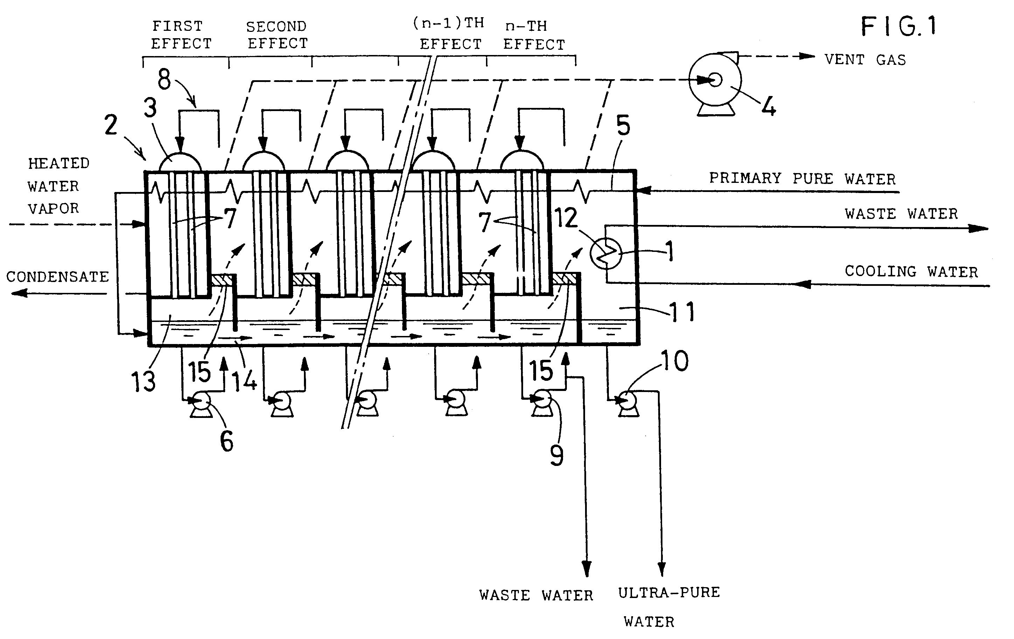

An embodiment of the present invention is described hereinbelow with reference to Fig. 1.

The equipment for manufacturing ultra-pure water according to the present invention comprises a multiple effect evaporating apparatus. The multiple effect evaporating apparatus is mainly composed of a multiple effect evaporating apparatus (2), a plurality of effect pumps (9), an ultra-pure water pump (10), and a vacuum apparatus (4).

Primary pure water is supplied to a pre-heating pipe (5) penetrating each effect in the evaporator (2), heated by receiving part of latent heat of condensation of water vapor generated in vertical heat transfer pipes (7) in each effect, heated further to a predetermined temperature of 125°C or higher by receiving part of latent heat of condensation of heated water vapor at the pre-heating pipe (5) in the first effect, and is introduced into a water pool (13) at the bottom of the first effect. Supply water in the water pool (13) is mixed with remaining concentrated liquid which has evaporated vapor in the pre-heating pipe (7), and most of the mixed liquid is supplied to an upper water tank (3) disposed at upper part of the first effect via a circulating pump (6). The mixed liquid flows down in the heat transfer pipe (7) forming a thin film and is evaporated at a temperature of higher than 125°C to generate water vapor by receiving most of the latent heat of condensation of heated vapor from the outside of the pipe. Concentrated liquid after generating water vapor flows down to the water pool (13) and is mixed with supply water as described above, and most of it is sent to the upper water tank (3) via the circulating pump (6).

The remaining mixed liquid enters the water pool (13) of the second effect through a connection port (14), and is mixed with the concentrated liquid flowing down the heat transfer pipe (7) in the same way as in the above case and most of it is sent into the water tank (3) at upper part of the second effect via the circulating pump (6).

Water vapor generated at the heat transfer pipe (7) of the first effect is introduced into the second effect via a mist separator (15) which removes the mist so as to decrease the mist accompanying the water vapor to extremely small amount. Most of the water vapor thus purified condenses at the outer surface of the heat transfer pipe (7) in the second effect, and the condensed water is received by a condensed liquid collecting unit (not shown in the figure) in the second effect as secondary pure water or as ultra-pure water. The remaining water vapor condenses at the outer surface of the pre-heating pipe (5) of the second effect, and the condensed liquid is mixed with the condensed liquid from the heat transfer pipe (7) in the condensed liquid collecting unit. All the condensed liquid combined enters the condensed liquid collecting unit in the third effect as secondary pure water or as ultra-pure water. Vapor generated by the *n*th effect condenses, after being freed from mists in the mist separator (15), on the outer surface of the pre-heating pipe (5) and on the outer surface of the heat transfer pipe of the condenser (1), and finally received by the secondary pure water pool (11) of the final effect.

The above-described processes are repeated in each effect and the condensed water is finally collected in the secondary ultra-pure water pool (11) under the condenser (1) disposed in proximity to the *n*th effect, and the water is drawn out therefrom via an ultra-pure water pump as ultra-pure water of extremely high purity.

The outer surface of the heat transfer pipe (7), with which pure vapor in the evaporator and pure water formed by condensing the vapor come into contact, respectively, and the inner surface of the evaporator itself has been mirror finished so as to have a mean roughness of 0.6 µm or less by using complex electropolishing.

The outer surface of the condenser (1) has also been mirror finished so as to have a mean roughness of 0.6 µm or less.

Fig. 5 is a graph showing mirror-finished surface roughness.

In the example described above, a non-finned heat transfer pipe used in the equipment for manufacturing pure water for medical use is also used in the heat transfer pipe (7).

Fig. 6 shows a modified example of the heat transfer pipe to be used in the above-described multiple effect evaporator (2). The heat transfer pipe (16) is a finned one and spiral fins (17) are attached to the outside of the heat transfer pipe (16). When the outer surface of the finned heat transfer pipe is mirror finished so as to have a mean roughness of 0.6 µm or less, dropwise condensation is liable to occur and the overall heat transfer coefficient increases.

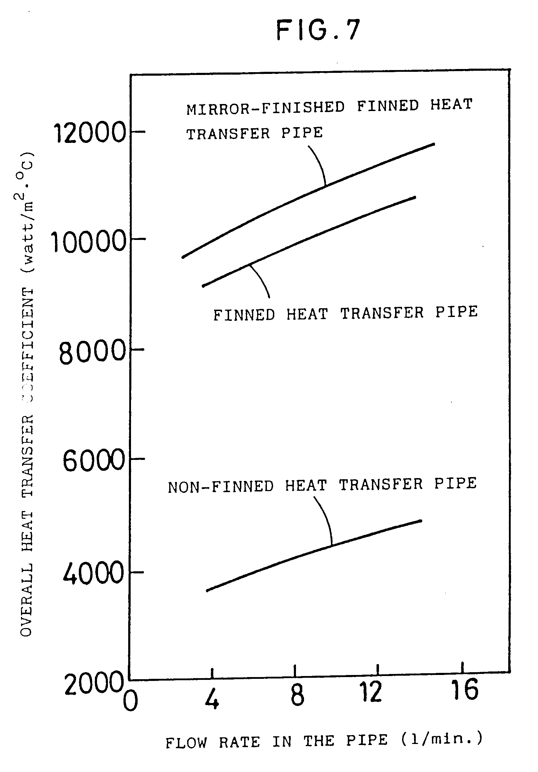

Fig. 7 is a graph showing the relation between the intrapipe flow rate and the overall heat transfer coefficient in a non-finned heat transfer pipe, a finned heat transfer pipe which has been mirror finished, and a mirror-finished finned heat transfer pipe (2 inches in inner diameter in each pipe). The graph indicates that the finned heat transfer pipe has 2 to 3 times of overall heat transfer coefficient to that of the non-finned heat transfer pipe, and the mirror-finished finned heat transfer pipe further has an overall heat transfer coefficient of some 10% higher as compared with that of the finned heat transfer pipe which has not been mirror finished. Accordingly, when the mirror-finished finned heat transfer pipes are used as heat transfer pipes, there is an advantage that the equipment can be compacted as compared with that in which non-finned heat transfer pipes are used.

Results of water quality examination when finned heat transfer pipes which have been mirror finished are used and when mirror-finished finned heat transfer pipes are used are listed in Table 2. The table indicates that, when mirror-finished finned heat transfer pipes are used, the concentration of iron ions can be made very small.

**Table 1**

| (Water quality requirements for ultra-pure water used in electronic industries) | |
|---|---|
| Items for water quality | For 16 Mbits |
| Specific resistance MΩ·cm (25°C) | ≥ 18.0 |
| Fine particles 0.03 µm (particles/mℓ) | ≤ 10 |
| Living microorganisms (cells/100 mℓ) | ≤ 0.5 |
| TOC (µg, C/ℓ) | ≤ 10 |
| Dissolved oxygen (µg, O₂/ℓ) | ≤ 10 |
| Silica (µg, SiO₂/ℓ) | ≤ 5 |
| Trace ions (µg/ℓ) | ≤ 0.01 |

**Table 2**

| (Results of water quality examination) | |
|---|---|
| | Iron ions concentration in water (µg/ℓ) |
| Finned heat transfer pipes which have not been mirror finished are used | 0.50 |
| Mirror-finished finned heat transfer pipes are used | 0.00 (Below assay limit) |

## Claims

1. Equipment for manufacturing ultra-pure water characterized in that, in a multiple effect evaporating apparatus for obtaining secondary pure water by evaporating primary pure water from a primary pure water apparatus, surface of portions, with which the water vapor generated by evaporating the primary pure water or the concentrated primary pure water and/or the secondary pure water produced by condensing the generated water vapor come into contact, respectively in the required effect, is mirror finished so as to have a mean roughness of 0.6 µm or less.

2. Equipment according to Claim 1, wherein the mirror-finished portions are outer surface of a heat transfer pipe, inner surface of an evaporator body, and/or outer surface of a condenser.

3. Equipment according to Claim 1 or 2, wherein mirror finishing is carried out by a complex electropolishing.

4. Equipment according to any one of Claims 1 to 3, wherein the heat transfer pipe is a finned heat transfer pipe.

5. Equipment according to any one of Claims 1 to 4, wherein the fins of the heat transfer pipe are spiral fins, a number of flange-shaped fins, or radial fins parallel to the axis of the heat transfer pipe.

6. Ultra-pure water such as used in electronic industries, wherein the concentration of metal ions particularly iron ions is below 0.01 ppb.

## Patentansprüche

1. Anlage zur Herstellung ultrareinen Wassers, dadurch gekennzeichnet, daß in einer Mehrstufenverdampfungsvorrichtung zur Erzielung von Sekundärreinwasser durch Verdampfen von Primärreinwasser aus einer Primärreinwassererzeugungsvorrichtung die Oberfläche jener Bereiche, mit denen der durch Verdampfen des Primärreinwassers erzeugte Wasserdampf oder das konzentrierte Primärreinwasser und/oder das durch Kondensieren des erzeugten Wasserdampfes erzeugte Sekundärreinwasser in Berührung kommen, bzw. in der erforderlichen Stufe, auf eine mittlere Rauhheit von 0,6 µm oder weniger hochglanzpoliert sind.

2. Anlage nach Anspruch 1, bei welcher die hochglanzpolierten Bereiche die Außenoberfläche eines Wärmeübertragungsrohres, die Innenoberfläche eines Verdampferkörpers und/oder die Außenoberfläche eines Kondensators sind.

3. Anlage nach Anspruch 1 oder 2, bei welcher das Hochglanzpolieren durch ein komplexes Elektropolieren durchgeführt wird.

4. Anlage nach einem der Ansprüche 1 bis 3, bei welcher das Wärmeübertragungsrohr ein mit Kühlrippen versehenes Wärmeübertragungsrohr ist.

5. Anlage nach einem der Ansprüche 1 bis 4, bei welcher die Kühlrippen des Wärmeübertragungsrohres spiralförmige Kühlrippen, eine Anzahl flanschförmiger Kühlrippen oder radiale Kühlrippen parallel zur Achse des Wärmeübertragungsrohres sind.

6. Ultrareinwasser, wie es in der Elektronikindustrie verwendet wird, bei welchem die Konzentration an Metallionen, insbesondere Eisenionen, unterhalb 0,01 ppb ist.

## Revendications

1. Installation pour la préparation d'eau ultrapure caractérisée en ce que, dans un appareil d'évaporation à effet multiple d'obtention d'eau pure secondaire par évaporation d'eau pure primaire à partir d'un appareil à eau pure primaire, la surface de parties, avec lesquelles la vapeur d'eau générée en évaporant l'eau pure primaire ou l'eau pure primaire concentrée et/ou l'eau pure secondaire produite en condensant la vapeur d'eau générée arrivent en contact, respectivement dans l'effet requis, est Finie miroir de façon à avoir une rugosité moyenne de 0,6 µm ou inférieure.

2. Installation selon la revendication 1, dans laquelle les parties Finies miroir sont la surface externe d'un tube de transfert de chaleur, la surface interne d'un corps d'évaporateur et/ou la surface externe d'un condenseur.

3. Installation selon la revendication 1 ou 2, dans laquelle le Finissage miroir est effectué par un polissage électrolytique complexe.

4. Installation selon l'une quelconque des revendications 1 à 3, dans laquelle le tube de transfert de chaleur est un tube de transfert de chaleur en ailette.

5. Installation selon l'une quelconque des revendications 1 à 4, dans laquelle les ailettes du tube de transfert de chaleur sont des ailettes en spirale, un certain nombre d'ailettes en forme de rebord, ou des ailettes radiales parallèles à l'axe du tube de transfert de chaleur.

6. Eau ultrapure telle qu'utilisée dans les industries électroniques, dans laquelle la concentration en ions métalliques, notamment en ions de fer, est inférieure à 0,01 ppb.
